(19) Europäisches Patentamt
European Patent Office
Office européen des brevets

(11) **EP 4 345 445 A1**

(12) **EUROPÄISCHE PATENTANMELDUNG**

(43) Veröffentlichungstag:
**03.04.2024 Patentblatt 2024/14**

(21) Anmeldenummer: 23199787.5

(22) Anmeldetag: **26.09.2023**

(51) Internationale Patentklassifikation (IPC):
**G01N 21/31** *(2006.01)* **G01N 21/84** *(2006.01)*
**A61B 5/00** *(2006.01)* **G01N 21/33** *(2006.01)*
**G01N 21/47** *(2006.01)*

(52) Gemeinsame Patentklassifikation (CPC):
**G01N 21/8422; A61B 5/0077; A61B 5/441;**
**A61B 5/4848; G01N 21/31;** G01N 21/33;
G01N 2021/4745; G01N 2021/8427;
G01N 2201/062; G01N 2201/08

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(30) Priorität: **27.09.2022 DE 102022124831**

(71) Anmelder: **Courage + Khazaka electronic GmbH**
**50829 Köln (DE)**

(72) Erfinder:
• **KHAZAKA, Georg**
**50859 Köln (DE)**
• **REBLE, Carina**
**50829 Köln (DE)**

(74) Vertreter: **Dantz, Dirk**
**Dantz IP & Law**
**Kurfürstendamm 43**
**10719 Berlin (DE)**

(54) **MESSVERFAHREN UND BLAULICHTSCHUTZMESSSYSTEM ZUR UNTERSUCHUNG DER SCHUTZFÄHIGKEIT VON SCHUTZMITTELN ZUM SCHUTZ VOR BLAUEM LICHT**

(57) Die Erfindung beschreibt ein Verfahren zur Untersuchung der Schutzfähigkeit von Schutzmitteln zum Schutz vor blauem Licht mit Hilfe einer spektroskopischen Messung mit den Verfahrensschritten Aussenden von Strahlung aus einer Strahlquelle, wobei die ausgesendete Strahlung Licht in einem Wellenlängenbereich zwischen 280nm und 500nm umfasst, Bestrahlen eines Messkörpers mit der ausgesendeten Strahlung, Detektion der von dem bestrahlten Messkörper remittierten Strahlung, Evaluierung der Schutzfähigkeit des Schutzmittels für Licht in einem Wellenlängenbereich von 400nm bis 500nm aus der remittierten Strahlung. Weiterhin beschreibt die Erfindung ein Blaulichtschutzmesssystem zur Untersuchung der Schutzfähigkeit von Schutzmitteln zum Schutz vor blauem Licht mit einer Strahlquelleneinrichtung, wobei die Strahlquelleneinrichtung eine Strahlquelle aufweist, einer Detektoreinheit und einer Steuereinheit.

Fig. 7

EP 4 345 445 A1

**Beschreibung**

Die Erfindung beschreibt ein Verfahren zur Untersuchung der Schutzfähigkeit von Schutzmitteln zum Schutz vor blauem Licht mit Hilfe einer spektroskopischen Messung mit den Verfahrensschritten Aussenden von Strahlung aus einer Strahlquelle, wobei die ausgesendete Strahlung Licht in einem Wellenlängenbereich zwischen 280nm und 500nm umfasst, Bestrahlen eines Messkörpers mit der ausgesendeten Strahlung, Detektion der von dem bestrahlten Messkörper remittierten Strahlung, Evaluierung der Schutzfähigkeit des Schutzmittels für Licht in einem Wellenlängenbereich von 400nm bis 500nm aus der remittierten Strahlung. Weiterhin beschreibt die Erfindung ein Blaulichtschutzmesssystem zur Untersuchung der Schutzfähigkeit von Schutzmitteln zum Schutz vor blauem Licht mit einer Strahlquelleneinrichtung, wobei die Strahlquelleneinrichtung eine Strahlquelle aufweist, einer Detektoreinheit und einer Steuereinheit.

Stand der Technik

Das blaue Licht stellt den langwelligsten Spektralbereich des sichtbaren Lichtspektrums der Sonnenbestrahlung dar, der direkt an den UV-Bereich angrenzt und dem eine Gefährdung für die menschliche Gesundheit zugesagt wird. Neueste Entwicklungen zeigen, dass die Industrie sich dieser Thematik annimmt, und immer mehr Sonnenschutzmittel entwickelt, welche auch im blauen Spektralbereich vor der Sonne schützen. Die Entwicklung von Cremes mit Blaulichtschutz sollte sich daher an den Belastungen durch natürliches Blaulicht orientieren. Eine standardisierte Methode zur Blaulichtschutzbestimmung gibt es bisher jedoch nicht.

Die bisherigen durch die Behörden der europäischen Union (EU) und der amerikanischen Food and Drug Administration (FDA) zugelassenen Methoden für die Bestimmung des SPF (Sun Protect Factor) sind alle schädigend für den beteiligten Probanden, indem sie ein Erythem, also eine durch Licht hervorgerufene Entzündungsreaktion der Haut hervorrufen (COLIPA -15 European Cosmetic, Toiletry and Perfumery Association: Colipa SPF Test Method 94/289, 1994; ISO-Standards 24442, 24443, 24444). Daher haben sowohl die FDA als auch die EU mehrfach darauf hingewiesen, dass künftige Forschungsaktivitäten auf neue Methoden zur Charakterisierung der Schutzwirkung von Sonnenschutzmitteln gerichtet werden müssen, um Spätfolgen für die Probanden zu vermeiden (European Commission, 20 Standardisation Mandate Assigned To CEN Concerning Methods For Testing Efficacy Of Sunscreen Products, M/389 EN, Brüssels, 12 July 2006).

Diese Aufgabe soll mit dieser Erfindung wahrgenommen werden. Die bestehenden Verfahren sind in verschiedenen Fundstellen definiert:
In Normen und Vorschriften definierte Verfahren:

a. ISO 24444 definiert ein Verfahren zur In-vivo-Bestimmung des SPF. Grundlage des Verfahrens ist die Erzeugung von Erythemen auf der Haut von Probanden durch Strahlung im UVB-Bereich. Daher ist das Verfahren für den Probanden schädigend.

b. ISO 24443 definiert ein In-vitro-Verfahren zur Bestimmung des UVA-Schutzfaktors (UVAPF). Das Sonnenschutzmittel wird auf eine Kunststoffplatte aufgetragen, so dass ein 5 Transmissionsspektrum des Sonnenschutzmittels gemessen werden kann. Aufgrund nicht kontrollierbarer Schwankungen der Prozedur wird das Transmissionsspektrum durch eine Skalierung an das Ergebnis des Erythem-Tests nach ISO 24444 angepasst und ist damit von dessen Durchführung abhängig. Die verwendete Kunststoffplatte ist mit einer aufgerauten Oberfläche ein unrealistisches Hautmodell.

c. ISO 24442 definiert ein In-vivo-Verfahren, in dem der UVA-Schutzfaktor mittels der minimalen UVA-Dosis zur Erzeugung einer anhaltende Pigmentierung (Sonnenbräune) der Haut bestimmt wird. Auch dieses Verfahren bedingt eine Veränderung der Haut des Probanden.

Patentierte Verfahren:
DE 198 28 497 A1 beschreibt ein Verfahren, in dem wie in der ISO 24444 bei Probanden durch UV-Bestrahlung der Haut Erytheme erzeugt werden. Diese werden im Gegensatz zur ISO 24444 durch Reflexionsspektroskopie detektiert. Das Verfahren ist damit ebenfalls schädigend. Die optische Wirkung (Schutz) des Sonnenschutzmittels wird nicht mit direkten optischen Messungen erfasst, sondern über eine biologische Reaktion des Körpers.

In DE 10 2004 020 644 A1 wird ein Verfahren beschrieben, in dem die Erzeugung von Radikalen durch UV-Belichtung in vivo mittels Elektronenspinresonanz (ESR) quantitativ gemessen wird. Auch hier wird die optische Wirkung des Sonnenschutzmittels nur indirekt erfasst. Zudem ist die Messung der ESR technisch aufwändig und erfordert relativ große, stationäre Geräte (Tischgeräte). Auch sind sie empfindlich auf Störungen durch Hochfrequenz-Einstrahlungen oder schnelle temporäre Magnetfeldänderungen, wie z.B. von elektrischen Schaltvorgängen.

Um den Label-SPF von topisch applizierten Sonnenschutzmitteln in vivo zu ermitteln, werden weltweit Testmethoden wie die ISO 24444, die FDA-Guideline oder der Australische Standard verwendet. Grundlage all dieser Methoden ist das Herbeiführen einer erythemalen Hautreaktion durch das Bestrahlen der Haut mit UV-Licht. Dies ist erforderlich, um die minimale erythemale Dosis der unbehandelten (MEDu) und produktbehandelten Haut (MEDp) zu bestimmen. Zuverlässige in vitro Methoden, bei denen die menschliche Haut durch synthetische Substratträger ersetzt wird, sind nicht verfügbar.

Bekannt sind monochromatische Geräte, die herkömmliche Xenon-Lampen verwenden und daher teuer in Anschaffung und Betrieb sind. Durch verbaute Monochromatoren werden unterschiedliche Wellenlängen nacheinander gemessen, was bei Bewegungen der Probanden unvorteilhaft ist. Polychromatische Geräte verwenden ebenfalls Xenon-Lampen. Der in vivo Messwert wird mittels Filter derart gewichtet, dass es mit dem in vivo UVA-PF übereinstimmt. Multi-LED-Geräte für Testinstitute stellen eine weitere Variante da, welche jedoch durch die spektroskopische Detektion deutlich größer und teurer ist.

Die Verfahren zur Bestimmung des Schutzes gegen UV-Strahlung sind allerdings nicht direkt übertragbar, da blaues Licht tiefer in die Haut eindringt. Außerdem beruhen die Schutzmittel vor blauem Licht teilweise auf anderen Wirkmechanismen (Antioxidantien), als diejenigen für den UV-Schutz.

Es ist daher Aufgabe der Erfindung, ein Verfahren zur Untersuchung der Schutzfähigkeit von Schutzmitteln zum Schutz vor blauem Licht bereitzustellen, mit dem die Belastung infolge der Einstrahlung auf die menschliche Haut verringert wird, das qualitativ hochwertige Analyseergebnisse bereitgestellt und gleichzeitig schnell und einfach durchführbar ist.

Es ist ebenfalls Aufgabe der Erfindung, ein Blaulichtschutzmesssystem zur Untersuchung der Schutzfähigkeit von Schutzmitteln zum Schutz vor blauem Licht bereitzustellen, das qualitativ hochwertige Analyseergebnisse bereitstellt, die Belastung infolge der Einstrahlung auf die menschliche Haut verringert und kostengünstig in Herstellung und Betrieb ist.

Die Aufgabe wird mittels des erfindungsgemäßen Verfahrens zur Untersuchung der Schutzfähigkeit von Schutzmitteln zum Schutz vor blauem Licht mit Hilfe einer spektroskopischen Messung gelöst. Vorteilhafte Ausführungen der Erfindung sind in den nachfolgenden Unteransprüchen dargelegt.

Das erfindungsgemäße Verfahren zur Untersuchung der Schutzfähigkeit von Schutzmitteln zum Schutz vor blauem Licht mit Hilfe einer spektroskopischen Messung weist vier Verfahrensschritte auf: Im ersten Verfahrensschritt wird Strahlung aus einer Strahlquelle ausgesandt. Dabei umfasst die ausgesandte Strahlung Licht in einem Wellenlängenbereich zwischen 280nm und 500nm.

Die Wellenlängenbereich sind wie folgt definiert:

< 320nm (UVB) mit < 0,1 % der gesamten UV-Intensität,
320nm bis 340nm (UVA II) 8% bis 20 % der gesamten UVA- Intensität
340nm bis 40 nm (UVA I) 80 % bis 92 % der gesamten UVA- Intensität

400nm bis 500nm blaues Licht

Im zweiten Verfahrensschritt wird ein Messkörper mit der ausgesandten Strahlung bestrahlt. Der Messkörper ist im Falle einer in vivo Messung die mit dem zu untersuchenden Schutzmittel bedeckte menschliche Haut, im Falle einer in vitro Messung ein standardisierter Prüfkörper, der mit dem zu untersuchenden Schutzmittel bedeckt ist. Im dritten Verfahrensschritt wird die remittierte Strahlung des bestrahlten Messkörpers detektiert. Aus den Intensitäten der remittierten Strahlung mit und ohne Schutzmittelkann nach GI.1 ein Maß der Schutzfähigkeit des Schutzmittels berechnet werden. Im vierten Verfahrensschritt wird die Schutzfähigkeit des Schutzmittels für Licht in einem Wellenlängenbereich von 400nm bis 500nm aus der remittierten Strahlung evaluiert.

In einem alternativen Verfahren wird das in vitro Spektrum mit dem in-vivo- Messwert der Haut bei einem wählbaren Wellenlängenbereich angepasst. Auf dieser Basis wird die Schutzfähigkeit des zu untersuchenden Schutzmittels in dem blauen Wellenlängenbereich bestimmt. Diese neue Technik bietet die Möglichkeit, die Schutzfähigkeit des Schutzmittels in vivo zu ermitteln, ohne jedoch die UV-strahlungsbedingten Erytheme zu erzeugen.

In einer Weiterbildung der Erfindung umfasst die ausgesendete Strahlung nur Licht mit einem Teil des Wellenlängenbereichs von 320nm bis 500nm. Bevorzugt 400nm bis 500nm als Blaulichtbereich. Insbesondere der Wellenlängenbereich, der an den UVA-Bereich (bis 400nm) angrenzt, wird in vitro auf einen Messkörper eingestrahlt, also der Wellenlängenbereich von 400nm bis 450nm. In diesem Wellenlängenbereich liegt die größte Gefährdung für die menschliche Haut, die Erfassung der Schutzfähigkeit eines Schutzmittels ist daher besonders wichtig.

In einem weiteren Aspekt der Erfindung umfasst die ausgesendete Strahlung nur Licht mit Wellenlängen außerhalb des Wellenlängenbereichs von 400nm bis 450nm. Zur Erfassung einer in vivo Messung wird insbesondere der UVA-Wellenlängenbereich (320nm - 400nm) in den Messkörper eingekoppelt.

In einer weiteren Gestaltung der Erfindung umfasst die ausgesendete Strahlung nur Licht mit Wellenlängen außerhalb des Wellenlängenbereichs von 400nm bis 500nm. Zur Erfassung einer in vivo Messung wird insbesondere der UVA-Wellenlängenbereich (320nm - 400nm) in den Messkörper eingestrahlt.

In einer weiteren Ausführung der Erfindung umfasst die Evaluierung einen Wellenlängenbereich mit Wellenlängen außerhalb des Wellenlängenbereichs von 400nm bis 500nm. Insbesondere der Wellenlängenbereich von UV-Licht, der an den blauen-Bereich (bis 400nm) angrenzt, wird evaluiert. In diesem Wellenlängenbereich liegt die größte Gefährdung für die menschliche Haut, die Erfassung der Schutzfähigkeit eines Schutzmittels ist daher besonders wichtig.

In einer weiteren Ausbildung der Erfindung umfasst die Evaluierung einen Wellenlängenbereich mit Wellenlängen $\lambda$ mit $\lambda < 400nm$. Zur Erfassung einer in vivo Messung wird insbesondere der UVA-Wellenlängenbereich (320nm - 400nm) evaluiert.

In einer weiteren Ausgestaltung der Erfindung umfasst die Evaluierung einen Wellenlängenbereich mit Wellenlängen $\lambda$ mit $320nm < \lambda < 400nm$. Zur Erfassung einer in vivo Messung zur Bestimmung der Schutzfähigkeit des Schutzmittels mittels Diffuser Rückstreuung (DRS) wird insbesondere der UVA-Wellenlängenbereich (320nm - 400nm) evaluiert. Zur Bestimmung der Schutzfähigkeit des Schutzmittels im UVB-Wellenlängenbereich (< 320nm) kann dieser Wellenlängenbereich ebenfalls optional evaluiert werden.

In einer weiteren Ausführung erfolgt das Aussenden von Strahlung aus einer einzelnen Strahlquelle, wobei die ausgesendete Strahlung der einen Strahlquelle Licht in einem Wellenlängenbereich zwischen 280nm und 500nm umfasst. Eine Strahlquelle ist im Rahmen dieser Schrift eine technische Einrichtung zur Erzeugung von elektromagnetischer Strahlung. Eine Strahlquelle ist daher nicht ein optisches Element zur Leitung, Umlenkung oder Veränderung der Intensität und/oder Wellenlänge der elektromagnetischen Strahlung. Eine Strahlquelle ist also z.B. kein Lichtleiter, Gitter, Prisma, Filter. Die Strahlquelle erzeugt elektromagnetische Strahlung in einem Wellenlängenbereich zwischen dem blauen Spektralbereich (von etwa 400nm bis 500nm Wellenlänge) und dem UV-Bereich (280nm bis 400nm).

In einer Weiterbildung der Erfindung ist die Strahlquelle ansteuerbar. Dadurch wird eine gezielte Ansteuerung der Strahlquelle und eine gezielte Anpassung des Gesamtspektrums auf verschiedene Anwendungen ermöglicht. Durch geeignete Wahl der Intensität der Strahlquelle wird außerdem Strahlungsdosis, entweder in Form einer individuellen Dosis (z.B. 0,1 MED) oder eines einstellbaren Grenzwerts erreicht. So wird die Strahlungsdosis für einen Probanden minimiert.

In einem weiteren Aspekt der Erfindung erfolgt die Ansteuerung der Strahlquelle durch eine Strahlquellensteuerung. Die Strahlquellensteuerung steuert gezielt die Strahlquelle und ermöglicht eine gezielte Anpassung des von der Strahlquelle erzeugte Spektrum, z.B. durch Steuerung des Wellenlängenbereichs und der Intensität der von der Strahlquelle erzeugten elektromagnetischen Strahlung.

In einer weiteren Ausführung der Erfindung wird durch die Ansteuerung der Strahlquelle die Wellenlänge, die Belichtungszeit und/oder die Intensität der einzelnen Strahlquellen gesteuert. Dadurch wird eine gezielte Ansteuerung der Strahlquelle für in vivo Messungen einerseits und in vitro Messungen andererseits ermöglicht. Durch geeignete Wahl der Intensität der Strahlquelle und die Belichtungszeit des Messkörpers wird außerdem eine Strahlungsdosis gewählt, entweder in Form einer individuellen Dosis (z. B. 0,1 MED) oder eines einstellbaren Grenzwerts erreicht. Damit wird die Strahlungsdosis für einen Probanden minimiert.

In einer weiteren Gestaltung der Erfindung erfolgt das Aussenden von Strahlung aus einer Strahlquelle, wobei die ausgesendete Strahlung Licht in einem Wellenlängenbereich zwischen 400nm und 500nm umfasst. Die Detektion der von dem bestrahlten Messkörper remittierten Strahlung erfolgt in einem Wellenlängenbereich zwischen 400nm und 500nm. Insbesondere der Wellenlängenbereich, der an den UVA-Bereich (bis 400nm) angrenzt, wird in vitro auf einen Messkörper eingestrahlt, und ebenfalls das remittierte Licht evaluiert. In diesem Wellenlängenbereich liegt die größte Gefährdung für die menschliche Haut, die Erfassung der Schutzfähigkeit eines Schutzmittels ist daher besonders wichtig.

In einer weiteren Ausbildung der Erfindung wird in einer separaten Messmethode ein Transmissionsspektrum des Schutzmittels gemessen. Mittels der separaten Messung des Transmissionsspektrum des Schutzmittels erfolgt die Bestimmung des UVA-Schutzfaktors (UVAPF) in Kombination mit der in vivo Messung zur Bestimmung der Schutzfähigkeit des Schutzmittels im blauen Wellenlängenbereich.

In einer Weiterbildung der Erfindung erfolgt die Messung des Transmissionsspektrums des Schutzmittels in vitro unter standardisierten Laborbedingungen.

In einem weiteren Aspekt der Erfindung wird das Schutzmittel für die Messung des Transmissionsspektrums des Schutzmittels auf eine PMMA-Platte aufgetragen. Polymethylmethacrylat (PMMA) transmittiert sichtbares Licht. Bei einer Dicke von 3 mm lässt PMMA bis zu 92 % des sichtbaren Lichts durch und reflektiert etwa 4 % von jeder seiner Oberflächen aufgrund seines Brechungsindex (1,4905 bei 589,3 nm). Es absorbiert Ultraviolettstrahlung bei Wellenlängen unter etwa 300 nm. Es existieren spezielle UVdurchlässige Varianten. Die Oberfläche weist eine Rauheit von ca. $5\mu m$ auf, das Schutzmittel wird in einer Menge von $1,3mg/cm^2$ aufgetragen.

In einer weiteren Ausführung der Erfindung wird das Transmissionsspektrum mithilfe der detektierten remittierten Strahlung angepasst. Die Anpassung erfolgt derart, dass ein hybrides Transmissionsspektrum $T_{hyb}$ für den bei der In-vivo-Messung nicht erfassten Spektralbereich bestimmt wird nach:

$$T_{hyb}(\lambda) = T_{in\ vitro}(\lambda) \ * \ \frac{T_{in\ vivo}(\lambda_{LED})}{T_{in\ vitro}(\lambda_{LED})}$$

mit $T_{in\ vivo}$ als Transmissionsspektrum ermittelt aus dem mittels in vivo Messung ermittelten Spektrum der detektierten remittierten Strahlung und $T_{in\ vitro}$ dem Transmissionsspektrum ermittelt aus der in vitro Messung. Werden mehrere Wellenlängen in vivo erfasst $T_{in\ vivo}(\lambda)$, so kann dies mit dem für einen stetigen Übergang passend skalierte $T_{in\ vitro}$ in den angrenzenden fehlenden Spektralbereiche zu einem Gesamtspektrum $T_{hyb}(\lambda)$ ergänzt werden.

In einer vorteilhaften Ausgestaltung der Erfindung erfolgt die Messung des Transmissionsspektrums auf einer separaten Messanordnung üblicherweise unter reproduzierbaren Laborbedingungen. Zur Verwendung kommt ein handelsübliches Spektrometer mit Xenon-Lampe in Frage, das eine Strahlung im Wellenlängenbereich von 280nm bis 500nm (UVB bis blaues Licht) abgibt und erfasst

In einer besonders vorteilhaften Gestaltung der Erfindung erfolgt die Evaluierung der Schutzfähigkeit des Schutzmittels aus der remittierten Strahlung und dem Transmissionsspektrum. Aufgrund der hohen Absorptionseigenschaften gibt die menschliche Haut nicht genügend UVB-Strahlung ab, um das Absorptionsspektrum des aufgetragenen Produkts im UVB-Bereich zu messen. Es ist daher notwendig, das Absorptionsspektrums des Testmaterials im UVB-Teil des Spektrums (280-320 nm) separat mit einer anderen Technik zu erfassen. Der in dieser Methode angewandte Ansatz verwendet die in vivo-Auswertung des absoluten UVA-Absorptionsspektrums des absoluten UVA-Absorptionsspektrums, wie es mit einer in vivo Messung gemessen wurde, mit einer Veredelung der spektralen Absorptionsform der UVB-Absorption des Testmaterials, wie sie mit der aktuellen in vitro Dünnschicht-Spektroskopie um den spektralen Scan zu vervollständigen, um die Schutzfähigkeit des Schutzmittels in vivo zu projizieren. Die Evaluierung und Hybridisierung eines in vivo Spektrums mit einem in vitro Spektrum erfolgt, um ein vollständiges UV-Spektrum zu erhalten, und daraus die Schutzfähigkeit des Schutzmittels gegenüber blauem Licht abzuleiten und/oder zu berechnen. Gleichermaßen ermöglicht die Erfindung durch die Verwendung eines in vitro-Spektrums welches den blauen Spektralbereich einschließt, die Schutzfähigkeit des Schutzmittels gegenüber UV-Licht abzuleiten und/oder zu berechnen

In einer weiteren vorteilhaften Ausgestaltung der Erfindung erfolgt die Evaluierung der Schutzfähigkeit des Schutzmittels aus zwei Messungen. In einer Weiterbildung der Erfindung erfolgt eine erste Messung vor dem Auftragen des Schutzmittels auf dem Messkörper. In einem weiteren Aspekt der Erfindung erfolgt eine zweite Messung nach dem Auftragen des Schutzmittels auf dem Messkörper.

In einer weiteren Ausführung der Erfindung erzeugt die Strahlquelle polychromatische Strahlung, wobei die erzeugte polychromatische Strahlung ungefiltert auf den Messkörper gestrahlt wird. Die Strahlquelle erzeugt Strahlung in einem maximalen Wellenlängenbereich von 280nm bis 500nm (UVB bis blaues Licht). Die erzeugte polychromatische Strahlung wird in dem erzeugten Wellenlängenbereich von der Erzeugung der polychromatischen Strahlung bis zum Auftreffen auf einen Messkörper nicht durch optische Elemente (Filter, Monochromatoren) verändert. Dadurch wird eine maximale Intensität der erzeugten elektromagnetischen Strahlung, eine ebenfalls maximale Intensität der remittierten bzw. transmittierten Strahlung und demzufolge ein hohes Signal-zu-Rausch-Verhältnis erreicht.

Die Aufgabe wird weiterhin mittels des erfindungsgemäßen Blaulichtschutzmesssystems zur Untersuchung der Schutzfähigkeit von Schutzmitteln zum Schutz vor blauem Licht gelöst. Weitere vorteilhafte Ausführungen der Erfindung sind ebenfalls in den Unteransprüchen dargelegt.

Das erfindungsgemäße Blaulichtschutzmesssystem zur Untersuchung der Schutzfähigkeit von Schutzmitteln zum Schutz vor blauem Licht weist eine Strahlquelleneinrichtung auf. Die Strahlquelleneinrichtung weist eine Strahlquelle auf. Eine Strahlquelle ist eine technische Einrichtung zur Erzeugung von elektromagnetischer Strahlung. Eine Strahlquelle ist daher nicht ein optisches Element zur Leitung, Umlenkung oder Veränderung der Intensität und/oder Wellenlänge der elektromagnetischen Strahlung. Eine Strahlquelle ist also z.B. kein Lichtleiter, Gitter, Prisma, Filter. Die Strahlquelle erzeugt elektromagnetische Strahlung.

Das Blaulichtschutzmesssystem weist außerdem eine Detektoreinheit sowie eine Steuereinheit auf. Die Detektoreinheit ist geeignet und dafür vorgesehen, Strahlung zu detektieren. Mittels der Steuereinheit ist das Blaulichtschutzmesssystem steuerbar, außerdem sind die von der Detektoreinheit erfassten Strahlung mittels der Steuereinheit verarbeitbar. Das Detektionsfenster und die Auflösung des Spektrometers wird mittels der Steuerungseinrichtung festgelegt, die detektierten Signale gespeichert, aufbereitet (z.B. verstärkt) und dargestellt.

Dadurch wird eine gezielte Ansteuerung der Strahlquelle und eine gezielte Anpassung des Gesamtspektrums auf verschiedene Anwendungen ermöglicht. Durch geeignete Wahl der Intensität der Strahlquelle wird außerdem Strahlungsdosis, entweder in Form einer individuellen Dosis (z. B. 0,1 MED) oder eines einstellbaren Grenzwerts erreicht. So wird die Strahlungsdosis für einen Probanden minimiert. Außerdem kann die Strahlquelle auch für andere Messaufgaben verwendet werden, z.B. zur Messung der Photodegradation von Schutzmitteln, wofür ein sonnenähnliches Spektrum nötig ist.

In einer Weiterbildung der Erfindung ist die Strahlquelle dazu geeignet, Strahlung zu erzeugen. Eine Strahlquelle ist eine technische Einrichtung zur Erzeugung von elektromagnetischer Strahlung. Eine Strahlquelle ist daher nicht ein optisches Element zur Leitung, Umlenkung oder Veränderung der Intensität und/oder Wellenlänge der elektromagnetischen Strahlung. Eine Strahlquelle ist also z.B. kein Lichtleiter, Gitter, Prisma, Filter. Die Strahlquelle erzeugt elektromagnetische Strahlung.

In einer weiteren Ausführung der Erfindung umfasst die Strahlquelleneinrichtung weitere optische Elemente, die dafür vorgesehen und/oder dafür geeignet sind, Strahlung zu konditionieren und/oder umzulenken.

In einer weiteren Gestaltung der Erfindung umfassen die optischen Elemente ein oder mehrere Elemente aus der Gruppe Lichtleiter, Filter, Monochromator, Spiegel oder andere optische Elemente. Mittels der optischen Elemente wird die von der Strahlquelle erzeugte Strahlung auf einen Messkörper geleitet, die Strahlung gefiltert, spektral beschnitten und/oder umgelenkt.

In einer weiteren Ausbildung der Erfindung ist die Strahlquelle dazu geeignet, polychromatisches Licht zu erzeugen. wobei die erzeugte polychromatische Strahlung gefiltert oder ungefiltert auf den Messkörper gestrahlt wird. Die Strahlquelle erzeugt Strahlung in einem bevorzugt maximalen Wellenlängenbereich von 280nm bis 500nm (UVB bis blaues Licht).

In einer Weiterbildung der Erfindung ist die Strahlquelle eine LED. Bevorzugt erfolgt die in vivo Messung nicht mit einem Summenspektrum aus unterschiedlichen Strahlquellen und/oder einer Xenon-Lampe, sondern mit nur einer LED. Dadurch ist das erfindungsgemäße Blaulichtschutzmesssystem deutlich kompakter und kostengünstiger als bekannte Systeme.

In einer weiteren Ausgestaltung der Erfindung erzeugt die LED Strahlung außerhalb des Wellenlängenbereichs von 400nm bis 500nm. Zur Erfassung einer in vivo Messung wird insbesondere der UVA-Wellenlängenbereich (320nm - 400nm) in den Messkörper eingestrahlt.

In einer weiteren Ausführung der Erfindung umfasst die Detektoreinheit einen Monochromator, Filter, Photomultiplier, Spektrometer und/oder eine Photodiode. Alle diese genannten Vorrichtungen sind geeignet, elektromagnetische Strahlung zu detektieren und abhängig von der Wellenlänge zu erfassen. Die Detektion einer in vivo-Messung erfolgt bevorzugt mit einer Photodiode. Dadurch ist das erfindungsgemäße Blaulichtschutzmesssystem deutlich kompakter und kostengünstiger als bekannte Systeme.

In einer weiteren Gestaltung der Erfindung umfasst die Strahlquelleneinrichtung eine Strahlquellensteuereinheit, die dafür vorgesehen und dafür geeignet ist die Strahlquelle zu steuern. Die Strahlquellensteuerung steuert gezielt die Strahlquelle und ermöglicht eine gezielte Anpassung des von der Strahlquelle erzeugte Spektrum, z.B. durch Steuerung des Wellenlängenbereichs und der Intensität der von der Strahlquelle erzeugten elektromagnetischen Strahlung.

In einer Weiterbildung der Erfindung ist die Strahlquellensteuereinheit dafür geeignet und dafür vorgesehen, die Wellenlänge, die Belichtungszeit und/oder die Intensität der Strahlquelle zu steuern. Die Strahlquellensteuerung steuert gezielt die Strahlquelle und ermöglicht eine gezielte Anpassung des von der Strahlquelle erzeugte Spektrum, z.B. durch Steuerung des Wellenlängenbereichs und der Intensität der von der Strahlquelle erzeugten elektromagnetischen Strahlung.

In einer weiteren Ausbildung der Erfindung ist die Detektoreinheit durch die Steuereinheit steuerbar und/oder sind die von der Detektoreinheit gemessenen Signale durch die Steuereinheit verarbeitbar. Das Detektionsfenster und die Auflösung des Spektrometers wird mittels der Steuerungseinrichtung festgelegt, die detektierten Signale gespeichert, aufbereitet (z.B. verstärkt) und dargestellt.

In einer weiteren Ausgestaltung der Erfindung ist die Strahlquellensteuerung mit der Detektoreinheit verbunden und geeignet und dafür vorgesehen, Signale der Detektoreinheit zu empfangen und/oder Steuerbefehle an die Detektoreinheit zu senden. Das Detektionsfenster und die Auflösung des Spektrometers wird ebenfalls mittels der Strahlquellensteuerung festgelegt, die detektierten Signale gespeichert, aufbereitet (z.B. verstärkt) und dargestellt.

Ausführungsbeispiele des erfindungsgemäßen Verfahrens zur Untersuchung der Schutzfähigkeit von Schutzmitteln zum Schutz vor blauem Licht und des erfindungsgemäßen Blaulichtschutzmesssystems zur Untersuchung der Schutzfähigkeit von Schutzmitteln zum Schutz vor blauem Licht sind in den Zeichnungen schematisch vereinfacht dargestellt und werden in der nachfolgenden Beschreibung näher erläutert.

Es zeigen:

Fig. 1: Blaulichtschutzmesssystems

Fig. 2: Blaulichtschutzmesssystems mit separat angeordneter Steuereinheit

Fig. 3: Blaulichtschutzmesssystems mit nur einer Strahlquelle; Steuereinheit und Strahlquellensteuereinheit in einem Gerät angeordnet

Fig. 4: Blaulichtschutzmesssystems mit nur einer Strahlquelle; separat angeordnete Steuereinheit

Fig. 5: Verfahrens zur Durchführung einer DRS- Messung zur Bestimmung eines Reflexionsspektrums

Fig. 6: Verfahrens zur Durchführung einer Messung zur Bestimmung eines Transmissionsspektrums

Fig. 7: Kombiniertes Verfahren zur Evaluierung der Schutzfähigkeit eines Blaulichtschutzmittels mit einer Messung zu Erfassung eines Reflexionsspektrums und einer Messung zur Erfassung eines Transmissionsspektrums

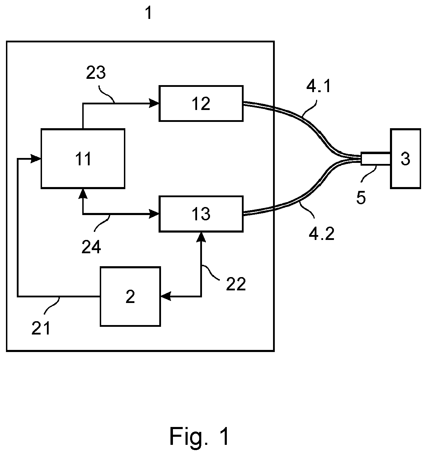

Fig. 1 zeigt schematisch ein Ausführungsbeispiel des erfindungsgemäßen Blaulichtschutzmesssystems 1 zur Durchführung einer in vivo Messung. Das Blaulichtschutzmesssystem 1 weist eine Strahlquelleneinrichtung 12 auf. Die Strahlenquelleneinrichtung 12 weist eine Strahlquelle 12.1 sowie optische Elemente auf, die dafür vorgesehen und/oder dafür geeignet sind, die von der Strahlquelle 12.1 erzeugte Strahlung zu konditionieren und/oder umzulenken, z.B. Lichtleiter, Filter, Monochromator, Spiegel und/oder andere optische Elemente.

Mittels eines Lichtleiters 4.1 wird das von der Strahlquelleneinrichtung 12 emittierte Spektrum über den Probenkopf 5 in den Messkörper 3 eingeleitet, das von dem Messkörper 3 reflektierte Licht gelangt über einen weiteren Lichtleiter 4.2 in die Detektoreinheit 13. Die Detektoreinheit 13 weist einen Monochromator, Filter, Photomultiplier, Spektrometer und/oder eine Photodiode auf. In diesem und allen folgenden Ausführungsbeispielen weist die Detektoreinheit 13 eine Photodiode auf. Detektoreinheit 13 und Strahlquelleneinrichtung 12 sind über Datenleitungen 23, 24 mit einer Strahlquellensteuerung 11 verbunden, die ihrerseits über eine weitere Datenleitung 21 mit der Steuereinheit 2 verbunden ist. Die Steuereinheit 2 ist üblicherweise ein PC oder Notebook-Computer mit geeignetem Computerprogramm. Steuereinheit 2 und Detektoreinheit 13 sind ebenfalls über eine Datenleitung 22 miteinander verbunden.

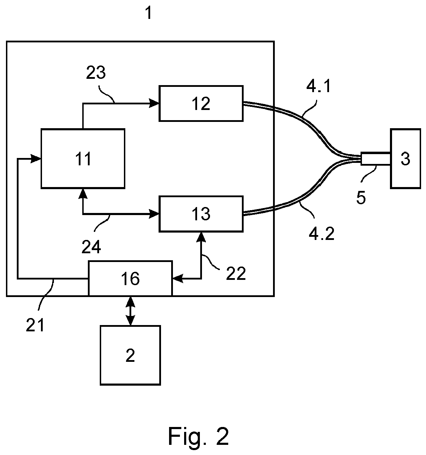

Ein weiteres Ausführungsbeispiel des erfindungsgemäßen Blaulichtschutzmesssystems 1 zeigt Fig. 2. Das Blaulichtschutzmesssystem 1 weist ebenfalls die Strahlquelleneinrichtung 12 auf. Mittels des Lichtleiters 4.1 wird das von der Strahlquelleneinrichtung 12 emittierte Licht über den Probenkopf 5 in den Messkörper 3 eingeleitet, das von dem Messkörper 3 reflektierte Licht gelangt über einen weiteren Lichtleiter 4.2 in die Detektoreinheit 13. Detektoreinheit 13 und Strahlquelleneinrichtung 12 sind über Datenleitungen 23, 24 mit einer Strahlquellensteuerung 11 verbunden. Die Steuereinheit 2 ist in diesem Ausführungsbeispiel entfernt von dem Blaulichtschutzmesssystem 1 angeordnet und mit diesem durch die Schnittstelle 16 verbunden. Die Verbindung kann drahtgebunden oder drahtlos sein, z.B. durch IP-Verbindung, Bluetooth usw. Schnittstelle 16 und Detektoreinheit 13 einerseits und Schnittstelle 16 und Strahlquellensteuerung 11 sind über die Datenleitungen 21, 22 miteinander verbunden.

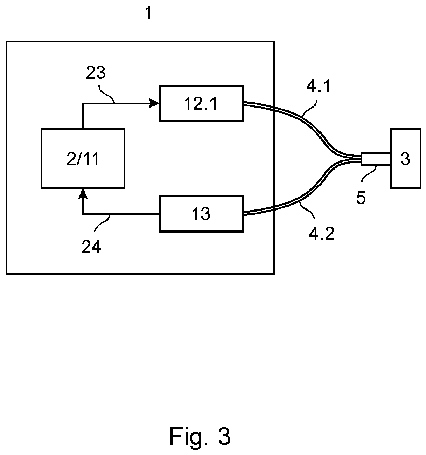

Fig. 3 zeigt ein weiteres Ausführungsbeispiel des erfindungsgemäßen Blaulichtschutzmesssystems 1 ebenfalls zur Durchführung einer in vivo Messung. Das Blaulichtschutzmesssystem 1 weist eine einzelne Strahlquelle 12.1 auf. Die Strahlquelle 12.1 ist vorteilhafterweise eine LED, die kostengünstig ist und eine lange Lebensdauer aufweist. Mittels eines Lichtleiters 4.1 wird das von der Strahlquelle emittierte Licht über den Probenkopf 5 in den Messkörper 3 eingeleitet, wobei der Messkörper 3 ein menschlicher oder tierischer Proband ist, das Blaulichtschutzmesssystem 1 wird also in vivo auf der menschlichen oder tierischen Haut angewendet.

Das von den Strahlquelle 12.1 ausgesendete Licht wird durch ein Linsensystem 14 gebündelt, in den Lichtleiter 4.1 eingekoppelt und auf den Messkörper 3 geleitet. Das von dem Messkörper 3 remittierte Licht gelangt über einen weiteren Lichtleiter 4.2 durch ein weiteres Linsensystem in die Detektoreinheit 13. Detektoreinheit 13 und Strahlquelle 12.1 sind über die Datenleitung 24 mit der Strahlquellensteuerung 11 verbunden, die ihrerseits über eine weitere Datenleitung mit der extern angeordneten Steuerungseinrichtung 2 verbunden ist. Die Strahlquellensteuerung 11 steuert die Intensität und Wellenlängen der Strahlquelle 12. und empfängt dazu die Daten der Detektoreinheit 13. Die Detektoreinheit 13 weist zur Detektion der remittierten Strahlung eine einzelne Photodiode auf. Detektoreinheit 13 und Strahlquelleneinrichtung 12 sind über Datenleitungen 23, 24 mit der Strahlquellensteuerung 11 verbunden, die in diesem Ausführungsbeispiel eine Baueinheit mit der Steuereinheit 2 bildet.

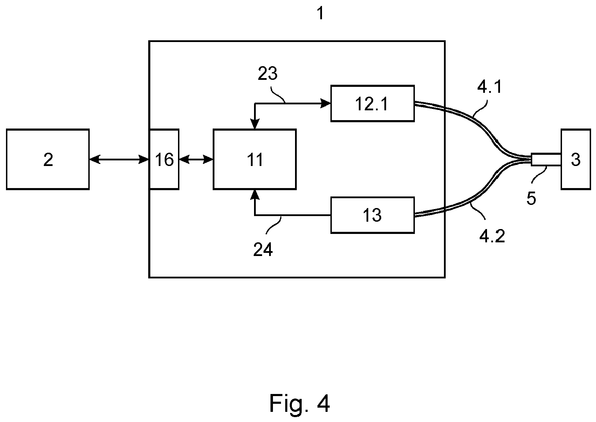

Ein bevorzugtes Ausführungsbeispiel des erfindungsgemäßen Blaulichtschutzmesssystems 1 ebenfalls zur Durchführung einer in vivo Messung zeigt Fig. 4. Das Blaulichtschutzmesssystem 1 entspricht dem im vorstehenden Ausführungsbeispiel (s. Fig. 3), lediglich ist die Steuereinheit 2 separat angeordnet und mit einer Schnittstelle 16 verbunden. Die Schnittstelle 16 ist mit der Strahlquellensteuerung 11 verbunden. Schnittstelle 16, Strahlquellensteuerung 11, Strahlquelle 12.1 und Detektoreinheit 13 sind in einem Gehäuse angeordnet und über die Schnittstelle 16 mit der Steuereinheit 2 verbunden. Aufgrund der geringen Abmessungen insbesondere der Strahlquelle 12.1, die eine LED ist, und der Detektoreinheit 13, die eine Photodiode aufweist, ist das Blaulichtschutzmesssystem 1 sehr kompakt ausgeführt. Aufgrund der Verwendung von Standardbauteilen (LED, Photodiode) ist das erfindungsgemäße Blaulichtschutzmesssystem 1 ebenfalls kostengünstig herstellbar und einsetzbar. Bekannte Systeme sind aufgrund der Mehrzahl an in ihrer Strahlquelleneinrichtung angeordneten Strahlquellen bzw. der Verwendung von Xenon-Lampen groß dimensioniert und teuer in Anschaffung und Unterhalt.

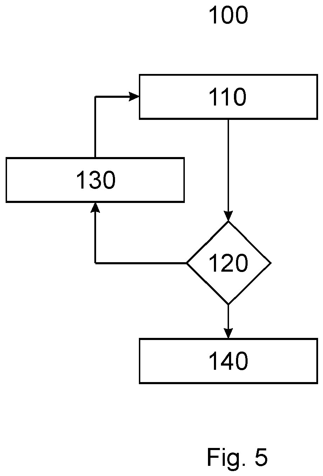

Fig. 5 zeigt ein Ausführungsbeispiel einer Durchführung des Verfahrens 100 einer in vivo Messung zur Erfassung des Remissionsspektrums mittels des erfindungsgemäßen Blaulichtschutzmesssystems 1 aus den vorangegangenen Ausführungsbeispielen (s. Fig. 1 bis Fig. 4). Die Durchführung erfolgt in vivo. Das Verfahren 100 einer Messung erfordert die Aufnahme von jeweils einem Remissionsspektrum der mit Schutzmittel unbehandelten Haut des Probanden 3 und der mit Schutzmittel behandelten Haut.

Dazu wird der Probenkopf 5 auf die unbehandelte Haut des Probanden 3 aufgebracht, d.h. das zu untersuchende Schutzmittel ist nicht auf der Haut des Probanden 3 appliziert. Dazu wird üblicherweise eine Stelle an der Innenseite des Unterarms oder des Rückens eines Probanden 3 ausgewählt. Danach erfolgt die erste Messung 110, indem die Strahlquellensteuerung 11 die LED 12.1 derart ansteuert, dass das von der LED 12.1 (s. Fig. 4) erzeugte Licht durch den Lichtleiter 4.1 auf die Haut des Probanden 3 geleitet wird.

Das von der LED 12.1 erzeugte Licht wird ungefiltert auf den Messkörper 3 eingestrahlt, um ein hohes S / R-Verhältnis zu gewährleisten. Insbesondere ist das von der LED 12.1 erzeugte Licht polychromatisch mit einem Intensitätsmaximum bei einer Wellenlänge im UVA-Bereich von 340nm. Die Einstrahlung erfolgt mit einer Intensität, die keine akute Schädigung in der Haut verursacht, was unterhalb der einfachen MED, bzw. unterhalb der MZB-Werte, bzw. deutlich unterhalb den durch Sonneneinstrahlung verursachten Werten liegt. Das von der Haut des Probanden 3 remittierte Licht wird durch den Lichtleiter 4.2 an Photodiode der Detektoreinheit 13 geleitet, von der Photodiode erfasst und in Messwerte umgewandelt, die Messwerte werden an die Steuereinheit 2 gesendet und in der Steuereinheit 2 gespeichert.

Die Steuereinheit 2 fragt dann ab 120, ob die zweite Messung der mit Schutzmittel behandelten Haut des Probanden 3 bereits durchgeführt wurde. Ist dies nicht der Fall, zeigt dies die Steuereinheit 2 an. Zur Durchführung der zweiten Messung 110 mit appliziertem Schutzmittel wird das Schutzmittel auf die Haut des Probanden 3 appliziert 130 in der Menge von 2.0mg/cm$^2$ auf der zu prüfenden Hautoberfläche. Die Applikation 130 des Schutzmittels und die anschließende zweite Messung 110 wird an derselben Stelle der Messprobe 3, insbesondere auf derselben Stelle der Haut eines Probanden, durchgeführt, um die Reproduzierbarkeit der ersten und der zweiten Messung 110 zu gewährleisten. Ebenfalls zur Gewährleistung der Reproduzierbarkeit steuert die Steuereinheit 2 die Strahlquellensteuerung 11 derart an, dass die Strahlquellensteuerung 11 die LED 12.1 derart ansteuert, dass das von der LED 12.1 erzeugte Licht durch den Lichtleiter 4.1 auf die Haut des Probanden 3 geleitet wird, wobei Intensität und Belichtungszeit von erster und zweiter Messung 110 übereinstimmen.

Das von der Haut des Probanden 3 remittierte Licht wird ebenfalls von der Photodiode der Detektoreinheit 13 erfasst und in Messwerte umgewandelt, die Messwerte werden an die Steuereinheit 2 gesendet und in der Steuereinheit 2 gespeichert. Das hier dargelegte Verfahren 100 benötigt einen Zeitaufwand von einigen wenigen s bis einige 10s.

Falls die Abfrage 120 ergibt, dass zweite Messung 110 bereits erfolgt ist, erfolgt eine Evaluierung 140 des Schutzmittels. Dazu führt die Steuereinheit 2 ein Programm zur Berechnung des Transmissionsspektrums $T_{in\ vivo}$ nach Gleichung 1 aus:

$$T_{in\ vivo} = \frac{1}{BLSF_{in\ vivo}} = \sqrt{\frac{R}{R_0}}$$

Gl. 1

mit $T_{in\ vivo}$ als Funktion der Wellenlänge $\lambda$, $BLSF_{in\ vivo}$ der Schutzwert für blaues Licht ermittelt durch das in vivo Verfahren 100, $R_0$ reflektierte Intensität der unbehandelten Haut des Probanden 3 als Funktion der Wellenlänge $\lambda$, R reflektierte Intensität der mit Schutzmittel behandelten Haut des Probanden 3 als Funktion der Wellenlänge $\lambda$. Das hier dargelegte Verfahren 100 benötigt einen Zeitaufwand von einigen wenigen s bis einige 10s.

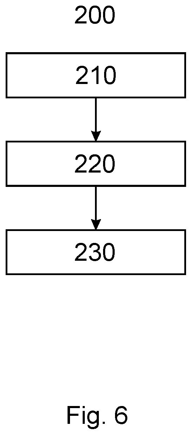

Ein Ausführungsbeispiel einer Durchführung des Verfahrens 200 einer in vitro Transmissionsmessung. zeigt Fig. 6. Die in vitro Messung 200 wird auf einer zum vorstehenden Ausführungsbeispiel (s. Fig. 5) separaten Messanordnung unter Laborbedingungen durchgeführt. Zur Verwendung kommt ein handelsübliches Spektrometer mit Xenon-Lampe, das eine Strahlung im Wellenlängenbereich von 280nm bis 500nm (UVB bis blaues Licht) abgibt und erfasst. Die Auflösung des Gerätes beträgt 1 nm.

Dazu wird das zu untersuchende Schutzmittel auf eine aufgerauhte PMMA-Platte in einer Menge von 1,3 mg pro cm$^2$ aufgetragen 210. Die PMMA-Platten weisen eine Rauhigkeit von 5 $\mu$m auf. Danach erfolgt die Durchführung 220 der Transmissionsmessung und die anschließende Auswertung 230, wobei der Schutzwert für den gesamten Wellenlängenbereich von 280nm bis 500nm BLSF nach Gleichung 2 bestimmt wird:

$$BLSF = \frac{\int_{280}^{500} S(\lambda)E(\lambda)d\lambda}{\int_{280}^{500} S(\lambda)E(\lambda)T_{trans}\,d\lambda}$$

Gl 2

mit S als Sonnenspektrum, E als Erythemwirkungsspektrum, $T_{trans}$ als Transmission und $d\lambda$ als Wellenlängeninkrement (1nm).

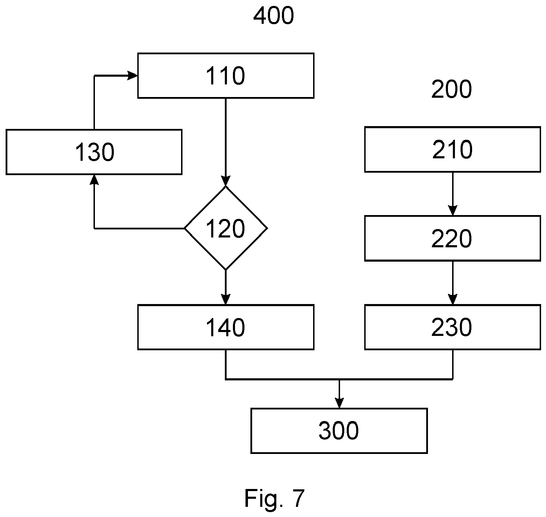

Fig. 7 zeigt ein Ausführungsbeispiel des erfindungsgemäßen Verfahrens 400 zur Durchführung einer kombinierten in vivo Reflexionsmessung 100 (s. Fig. 5) und einer in vitro Transmissionsmessung 200 (s. Fig. 6). Beide Messungen 100, 200 sind in den angegebenen Abbildungen beschrieben und werden wie beschrieben auf separat angeordneten Messanordnungen durchgeführt und ebenfalls separat evaluiert 140, 230.

Die beiden Ergebnisse der einzelnen Evaluierungen 140, 230 werden kombiniert evaluiert 300. Dazu wird zuerst das hybride Transmissionsspektrum $T_{hyb}$, berechnet, wobei das in vitro-Transmissionsspektrum $T_{in\ vitro}$ mittels des Reflexionsspektrums $T_{in\ vivo}$ skaliert wird:

$$T_{hyb}(\lambda) = T_{in\ vitro}(\lambda) * \frac{T_{in\ vivo}(\lambda_{LED})}{T_{in\ vitro}(\lambda_{LED})} \text{Gl. 3}$$

Die Schutzfähigkeit des Schutzmittels für den Spektralbereich von UVA (320nm) bis in den HEV Spektralbereich (450nm) BLSF ergibt sich dann nach Gleichung 4 (hier ist E = IPD($\lambda$) das IPD Spektrum; S = I($\lambda$) ist das Sonnenspektrum):

$$BLSF = \frac{\int_{320}^{450} S(\lambda)E(\lambda)d\lambda}{\int_{320}^{450} S(\lambda)E(\lambda)T_{hyb}\,d\lambda}$$

Gl. 4

Die Schutzfähigkeit des Schutzmittels in dem für die vorliegende Erfindung interessante Spektralbereich des blauen Lichts (400nm bis 500nm) wird ermittelt nach Gleichung 5 (hier ist E = IPD($\lambda$) das IPD Spektrum; S = I($\lambda$) ist das Sonnenspektrum)

$$BLSF\ (400nm - 500nm) = \frac{\int_{400}^{500} S(\lambda)E(\lambda)d\lambda}{\int_{400}^{500} S(\lambda)E(\lambda)T_{hyb}\,d\lambda}$$

Gl.5

Die Schutzfähigkeit des Schutzmittels von 400nm bis 450nm BLSF (400nm-450nm) wird nach Gleichung 6 ermittelt (hier ist E = IPD($\lambda$) das IPD Spektrum; S = I($\lambda$) ist das Sonnenspektrum):

$$BLSF\ (400nm - 450nm) = \frac{\int_{400}^{450} S(\lambda)E(\lambda)d\lambda}{\int_{400}^{450} S(\lambda)E(\lambda)T_{hyb}\,d\lambda}$$

Gl.6

Die Schutzfähigkeit des Schutzmittels für den Spektralbereich von UVA (320-400nm) UVA-SF ergibt sich dann nach Gleichung 4 (hier ist E = PPD($\lambda$) das PPD Spektrum; S = I($\lambda$) ist das Sonnenspektrum bzw. UVA-Quelle für PPD-test.):

$$UVA - SF = \frac{\int_{320}^{400} S(\lambda)E(\lambda)d\lambda}{\int_{320}^{400} S(\lambda)E(\lambda)T_{hyb}\,d\lambda}$$

Gl. 7

Die Schutzfähigkeit des Schutzmittels für den Spektralbereich von UVB bis UVA (280-400nm) UV-SF ergibt sich dann nach Gleichung 4

$$UV - SF = \frac{\int_{290}^{400} S(\lambda)E(\lambda)d\lambda}{\int_{290}^{400} S(\lambda)E(\lambda)T_{hyb}\,d\lambda}$$

Gl. 8

In allen Gleichungen für BLSF oder UVA-SR wird optional ein Korrekturfunktion F (BLSF) = BLSF_korr bzw. F (UVA-SF)= UVA-PF_korr verwendet, welcher z. B. hauttypabhängige Unterschiede beschreibt. Eine Korrekturfunktion macht Werte verschiedener Hauttypen vergleichbar und gibt einen korrigierten Wert BLSF_korr oder UVA-PF_korr aus.

F kann beispielsweise ein linearer Faktor (d.h. F(BLSF)=BLSF*C)
oder eine exponentielle Funktion sein (d.h. F(BLSF)=BLSF$^C$)
C kann hierbei z. B. vom Hauttyp oder dem ITA°-Wert abhängig sein. Wie an Gl. 4 gezeigt, können die Formeln in Gleichung 2 bis 8 folgendermaßen geschrieben werden:

$$BLSF_{korr} = F(BLSF) = F\left( \frac{\int_{320}^{450} S(\lambda)\mathrm{E}(\lambda)\mathrm{d}\lambda}{\int_{320}^{450} S(\lambda)\mathrm{E}(\lambda)T_{hyb}\,d\lambda} \right)$$

Die Kalibration der Methode kann beispielsweise durch geeignete Referenzverfahren wie die Elektronenspinresonanzspektroskopie erfolgen.

Durch die Eliminierung aller erythem und pigmentierungs-relevanten UV-B - und UV-A - Bestrahlungsdosen während des Messprozesses, wird bei den Testprobanden keinerlei Hautreaktion hervorgerufen. Folglich muss auch keine MED Bestimmung mehr erfolgen.

Durch die erfindungsgemäße nicht-erythemale Messmethode kann die Schutzfähigkeit des Schutzmittels im Wellenlängenbereich des blauen Lichts bestimmt werden.

BEZUGSZEICHENLISTE

| | |
|---|---|
| 1 | Blaulichtschutzmesssystem |
| 2 | Steuereinrichtung |
| 3 | Probe/Messkörper |
| 4.1, 4.2 | Lichtleiter/Faserbündel |
| 5 | Probenkopf |
| 11 | Strahlquellensteuerung |
| 12 | Strahlquelleneinrichtung |
| 12.1 | Strahlquelle/LED |
| 13 | Detektor |
| 21 | Verbindung Strahlquellensteuerung - Steuereinrichtung |
| 22 | Verbindung Detektor/Spektrometer - Steuereinrichtung |
| 23 | Verbindung Strahlquellensteuerung - Strahlquelleneinrichtung |
| 24 | Verbindung Strahlquellensteuerung - Detektor |
| 100 | Verfahren zur Aufnahme eines Reflexionsspektrums (DRS) |
| 110 | Durchführen einer Messung eines Reflexionsspektrums (DRS) |
| 120 | Abfrage |
| 130 | Auftragen des Schutzmittels |
| 140 | Evaluation |
| 200 | Verfahren zur Aufnahme eines Transmissionsspektrums |
| 210 | Auftragen des Schutzmittels |
| 220 | Durchführen einer Messung eines Transmissionsspektrums |
| 230 | Auswerten der Transmissionsmessung |
| 300 | Evaluieren des Schutzmittels |
| 400 | Verfahren zur Untersuchung der Schutzfähigkeit von Schutzmitteln zum Schutz vor blauem Licht |

**Patentansprüche**

1. Verfahren (400) zur Untersuchung der Schutzfähigkeit von Schutzmitteln zum Schutz vor blauem Licht mit Hilfe einer spektroskopischen Messung mit den Verfahrensschritten:

   • Aussenden von Strahlung aus einer Strahlquelle (12.1),

wobei die ausgesendete Strahlung Licht in einem Wellenlängenbereich zwischen 280nm und 500nm umfasst,
- Bestrahlen eines Messkörpers (3) mit der ausgesendeten Strahlung,
- Detektion der von dem bestrahlten Messkörper remittierten Strahlung,
- Evaluierung (300) der Schutzfähigkeit des Schutzmittels für Licht in einem Wellenlängenbereich von 400nm bis 500nm aus der remittierten Strahlung.

**2.** Verfahren (400) zur Untersuchung der Schutzfähigkeit von Schutzmitteln zum Schutz vor blauem Licht nach Anspruch 1,
**dadurch gekennzeichnet, dass**
die ausgesendete Strahlung nur Licht mit einem Teil des Wellenlängenbereichs von 400nm bis 500nm umfasst.

**3.** Verfahren (400) zur Untersuchung der Schutzfähigkeit von Schutzmitteln zum Schutz vor blauem Licht nach Anspruch 1 oder 2,
**dadurch gekennzeichnet, dass**
die ausgesendete Strahlung nur Licht mit Wellenlängen außerhalb des Wellenlängenbereichs von 400nm bis 450nm umfasst.

**4.** Verfahren (400) zur Untersuchung der Schutzfähigkeit von Schutzmitteln zum Schutz vor blauem Licht nach Anspruch 3,
**dadurch gekennzeichnet, dass**
die ausgesendete Strahlung nur Licht mit Wellenlängen außerhalb des Wellenlängenbereichs von 400nm bis 500nm umfasst.

**5.** Verfahren (400) zur Untersuchung der Schutzfähigkeit von Schutzmitteln zum Schutz vor blauem Licht nach einem oder mehreren der vorhergehenden Ansprüche,
**dadurch gekennzeichnet, dass**
die Evaluierung (300) einen Wellenlängenbereich mit Wellenlängen außerhalb des Wellenlängenbereichs von 400nm bis 500nm umfasst.

**6.** Verfahren (400) zur Untersuchung der Schutzfähigkeit von Schutzmitteln zum Schutz vor blauem Licht nach Anspruch 5,
**dadurch gekennzeichnet, dass**
die Evaluierung (300) einen Wellenlängenbereich mit Wellenlängen $\lambda$ mit $\lambda < 400nm$ umfasst.

**7.** Verfahren (400) zur Untersuchung der Schutzfähigkeit von Schutzmitteln zum Schutz vor blauem Licht nach Anspruch 6,
**dadurch gekennzeichnet, dass**
die Evaluierung einen Wellenlängenbereich mit Wellenlängen $\lambda$ mit $320nm < \lambda < 400nm$ umfasst.

**8.** Verfahren (400) zur Untersuchung der Schutzfähigkeit von Schutzmitteln zum Schutz vor blauem Licht nach einem oder mehreren der vorhergehenden Ansprüche,
**dadurch gekennzeichnet, dass**
das Aussenden von Strahlung aus einer einzelnen Strahlquelle (12.1) erfolgt, wobei die ausgesendete Strahlung der einen Strahlquelle (12.1) Licht in einem Wellenlängenbereich zwischen 280nm und 500nm umfasst.

**9.** Verfahren (400) zur Untersuchung der Schutzfähigkeit von Schutzmitteln zum Schutz vor blauem Licht nach Anspruch 8,
**dadurch gekennzeichnet, dass**
die einzelnen Strahlquellen (12.1) ansteuerbar ist.

**10.** Verfahren (400) zur Untersuchung der Schutzfähigkeit von Schutzmitteln zum Schutz vor blauem Licht nach Anspruch 8 oder 9,
**dadurch gekennzeichnet, dass**
die Ansteuerung der Strahlquelle (12.1) durch eine Strahlquellensteuerung (11) erfolgt.

**11.** Verfahren (400) zur Untersuchung der Schutzfähigkeit von Schutzmitteln zum Schutz vor blauem Licht nach Anspruch 10,
**dadurch gekennzeichnet, dass**

durch die Ansteuerung der Strahlquelle (12.1) die Wellenlänge, die Belichtungszeit und/oder die Intensität der einzelnen Strahlquelle (12.1) gesteuert wird.

12. Verfahren (400) zur Untersuchung der Schutzfähigkeit von Schutzmitteln zum Schutz vor blauem Licht nach einem oder mehreren der vorhergehenden Ansprüche,
    **dadurch gekennzeichnet, dass**

    das Aussenden von Strahlung aus einer Strahlquelle (12.1) erfolgt,
    wobei die ausgesendete Strahlung Licht in einem Wellenlängenbereich zwischen 400nm und 500nm umfasst,
    wobei die Detektion der von dem bestrahlten Messkörper (3) remittierten Strahlung in einem Wellenlängenbereich zwischen 400nm und 500nm erfolgt.

13. Verfahren (400) zur Untersuchung der Schutzfähigkeit von Schutzmitteln zum Schutz vor blauem Licht nach einem oder mehreren der vorhergehenden Ansprüche,
    **dadurch gekennzeichnet, dass**
    mit einer separaten Methode ein Transmissionsspektrum des Schutzmittels bestimmt (220) wird.

14. Verfahren (400) zur Untersuchung der Schutzfähigkeit von Schutzmitteln zum Schutz vor blauem Licht nach Anspruch 13,
    **dadurch gekennzeichnet, dass**
    die Messung (220) des Transmissionsspektrums des Schutzmittels in vitro erfolgt.

15. Verfahren (400) zur Untersuchung der Schutzfähigkeit von Schutzmitteln zum Schutz vor blauem Licht nach Anspruch 13 oder 14,
    **dadurch gekennzeichnet, dass**
    das Schutzmittel für die Messung (220) des Transmissionsspektrums auf eine PMMA-Platte aufgetragen (210) wird.

16. Verfahren (400) zur Untersuchung der Schutzfähigkeit von Schutzmitteln zum Schutz vor blauem Licht nach einem oder mehreren der Ansprüche 13 bis 15,
    **dadurch gekennzeichnet, dass**
    das Transmissionsspektrum mithilfe der detektierten remittierten Strahlung angepasst wird.

17. Verfahren (400) zur Untersuchung der Schutzfähigkeit von Schutzmitteln zum Schutz vor blauem Licht nach einem oder mehreren der Ansprüche 13 bis 16,
    **dadurch gekennzeichnet, dass**
    die Messung (220) des Transmissionsspektrums auf einer separaten Messanordnung erfolgt.

18. Verfahren (400) zur Untersuchung der Schutzfähigkeit von Schutzmitteln zum Schutz vor blauem Licht nach einem oder mehreren der Ansprüche 13 bis 17,
    **dadurch gekennzeichnet, dass**
    die Evaluierung (300) der Schutzfähigkeit des Schutzmittels aus der remittierten Strahlung und dem Transmissionsspektrum erfolgt.

19. Verfahren (400) zur Untersuchung der Schutzfähigkeit von Schutzmitteln zum Schutz vor blauem Licht nach einem oder mehreren der vorhergehenden Ansprüche,
    **dadurch gekennzeichnet, dass**
    das Aussenden der Strahlung in-vivo auf der menschlichen Haut erfolgt.

20. Verfahren (400) zur Untersuchung der Schutzfähigkeit von Schutzmitteln zum Schutz vor blauem Licht nach einem oder mehreren der vorhergehenden Ansprüche,
    **dadurch gekennzeichnet, dass**
    die Evaluierung (300) der Schutzfähigkeit des Schutzmittels aus zwei Messungen erfolgt.

21. Verfahren (400) zur Untersuchung der Schutzfähigkeit von Schutzmitteln zum Schutz vor blauem Licht nach Anspruch 20,
    **dadurch gekennzeichnet, dass**
    eine erste Messung vor dem Auftragen (130) des Schutzmittels auf dem Messkörper (3) erfolgt.

22. Verfahren (400) zur Untersuchung der Schutzfähigkeit von Schutzmitteln zum Schutz vor blauem Licht nach Anspruch 20 oder 21,
**dadurch gekennzeichnet, dass**
eine zweite Messung nach dem Auftragen (130) des Schutzmittels auf dem Messkörper (3) erfolgt.

23. Verfahren (400) zur Untersuchung der Schutzfähigkeit von Schutzmitteln zum Schutz vor blauem Licht nach einem oder mehreren der vorhergehenden Ansprüche,
**dadurch gekennzeichnet, dass**

die Strahlquelle (12.1) polychromatische Strahlung erzeugt,
wobei die erzeugte polychromatische Strahlung ungefiltert auf den Messkörper (3) gestrahlt wird.

24. Blaulichtschutzmesssystem (1) zur Untersuchung der Schutzfähigkeit von Schutzmitteln zum Schutz vor blauem Licht, das folgende Komponenten aufweist

• eine Strahlquelleneinrichtung (12)
wobei die Strahlquelleneinrichtung (12) eine Strahlquelle (12.1) aufweist,
• einen Detektoreinheit (13)
• eine Steuereinheit (2).

25. Blaulichtschutzmesssystem (1) zur Untersuchung der Schutzfähigkeit von Schutzmitteln zum Schutz vor blauem Licht nach Anspruch 24,
**dadurch gekennzeichnet, dass**
die Strahlquelle (12.1) dazu geeignet ist, Strahlung zu erzeugen.

26. Blaulichtschutzmesssystem (1) zur Untersuchung der Schutzfähigkeit von Schutzmitteln zum Schutz vor blauem Licht nach Anspruch 24 oder 25,
**dadurch gekennzeichnet, dass**
die Strahlquelleneinrichtung (12) weitere optische Elemente umfasst, die dafür vorgesehen und/oder dafür geeignet sind, Strahlung zu konditionieren und/oder umzulenken.

27. Blaulichtschutzmesssystem (1) zur Untersuchung der Schutzfähigkeit von Schutzmitteln zum Schutz vor blauem Licht nach Anspruch 26,
**dadurch gekennzeichnet, dass**
die optischen Elemente ein oder mehrere Elemente aus der Gruppe Lichtleiter, Filter, Monochromator, Spiegel oder andere optische Elemente umfassen.

28. Blaulichtschutzmesssystem (1) zur Untersuchung der Schutzfähigkeit von Schutzmitteln zum Schutz vor blauem Licht nach einem oder mehreren der Ansprüche 24 bis 27,
**dadurch gekennzeichnet, dass**
die Strahlquelle (12.1) dazu geeignet ist, polychromatisches Licht zu erzeugen.

29. Blaulichtschutzmesssystem (1) zur Untersuchung der Schutzfähigkeit von Schutzmitteln zum Schutz vor blauem Licht nach einem oder mehreren der Ansprüche 24 bis 27,
**dadurch gekennzeichnet, dass**
die Strahlquelle (12.1) eine LED ist.

30. Blaulichtschutzmesssystem (1) zur Untersuchung der Schutzfähigkeit von Schutzmitteln zum Schutz vor blauem Licht nach Anspruch 29,
**dadurch gekennzeichnet, dass**
die LED Strahlung außerhalb des Wellenlängenbereichs von 400nm bis 500nm erzeugt.

31. Blaulichtschutzmesssystem (1) zur Untersuchung der Schutzfähigkeit von Schutzmitteln zum Schutz vor blauem Licht nach einem oder mehreren der Ansprüche 24 bis 30,
**dadurch gekennzeichnet, dass**
die Detektoreinheit (13) einen Monochromator, Filter, Photomultiplier, Spektrometer und/oder eine Photodiode umfasst.

**32.** Blaulichtschutzmesssystem (1) zur Untersuchung der Schutzfähigkeit von Schutzmitteln zum Schutz vor blauem Licht nach einem oder mehreren der Ansprüche 24 bis 31,
**dadurch gekennzeichnet, dass**
die Strahlquelleneinrichtung (12) eine Strahlquellensteuereinheit (11) umfasst, die dafür vorgesehen und dafür geeignet ist die Strahlquelle (12.1) zu steuern.

**33.** Blaulichtschutzmesssystem (1) zur Untersuchung der Schutzfähigkeit von Schutzmitteln zum Schutz vor blauem Licht nach Anspruch 32,
**dadurch gekennzeichnet, dass**
die Strahlquellensteuereinheit (11) dafür geeignet und dafür vorgesehen ist, die Wellenlänge, die Belichtungszeit und/oder die Intensität der Strahlquelle (12.1) zu steuern.

**34.** Blaulichtschutzmesssystem (1) zur Untersuchung der Schutzfähigkeit von Schutzmitteln zum Schutz vor blauem Licht nach einem oder mehreren der Ansprüche 24 bis 30,
**dadurch gekennzeichnet, dass**
die Detektoreinheit (13) durch die Steuereinheit (2) steuerbar ist und/oder die von der Detektoreinheit (13) gemessenen Signale durch die Steuereinheit (2) verarbeitbar sind.

**35.** Blaulichtschutzmesssystem (1) zur Untersuchung der Schutzfähigkeit von Schutzmitteln zum Schutz vor blauem Licht nach einem oder mehreren der Ansprüche 24 bis 34
**dadurch gekennzeichnet, dass**
die Strahlquellensteuerung (11) mit der Detektoreinheit (13) verbunden ist und geeignet und dafür vorgesehen ist, Signale der Detektoreinheit (13) zu empfangen und/oder Steuerbefehle an die Detektoreinheit (13) zu senden.

Fig. 1

Fig. 2

Fig. 3

Fig. 4

100

Fig. 5

200

```
┌─────────────────────┐
│         210         │
└─────────────────────┘
           │
           ▼
┌─────────────────────┐
│         220         │
└─────────────────────┘
           │
           ▼
┌─────────────────────┐
│         230         │
└─────────────────────┘
```

Fig. 6

EP 4 345 445 A1

400

Fig. 7

21

# EP 4 345 445 A1

Europäisches Patentamt
European Patent Office
Office européen des brevets

## EUROPÄISCHER RECHERCHENBERICHT

Nummer der Anmeldung

EP 23 19 9787

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TW 201 326 736 A (HC PHOTONICS CORP [TW]) 1. Juli 2013 (2013-07-01) | 1-3,9, 12, 19-25, 28,29, 31,34 | INV. G01N21/31 G01N21/84 A61B5/00 |
| | * Seiten 7-12; Ansprüche 1,2,3,7,10; Abbildungen 1-5 * ----- | | ADD. G01N21/33 G01N21/47 |
| X | US 2022/240838 A1 (KOHLI INDERMEET [US] ET AL) 4. August 2022 (2022-08-04) | 1-3,8, 12,19, 23-28,31 | |
| | * Absätze [0036] - [0038], [0046], [0052]; Abbildungen 1-3 * ----- | | |
| X | MOSELEY H ET AL: "New sunscreens confer improved protection for photosensitive patients in the blue light region", BRITISH JOURNAL OF DERMATOLOGY, JOHN WILEY, HOBOKEN, USA, Bd. 145, Nr. 5, 7. Juli 2008 (2008-07-07), Seiten 789-794, XP071116958, ISSN: 0007-0963, DOI: 10.1046/J.1365-2133.2001.04429.X * Zusammenfassung; Abbildungen 3,4 * * Seiten 790-794 * ----- | 1-3, 8-19, 24-28, 34,35 | |
| A | EP 3 865 052 A1 (COURAGE KHAZAKA ELECTRONIC GMBH [DE]) 18. August 2021 (2021-08-18) * Absätze [0047] - [0048]; Abbildung 1 * ----- -/-- | 10,11, 32,33,35 | RECHERCHIERTE SACHGEBIETE (IPC) G01N A61B |

Der vorliegende Recherchenbericht wurde für alle Patentansprüche erstellt

| Recherchenort | Abschlußdatum der Recherche | Prüfer |
|---|---|---|
| München | 18. Januar 2024 | Duijs, Eric |

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

**EP 23 19 9787**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BACQUEVILLE D. ET AL: "Phenylene Bis-Diphenyltriazine (TriAsorB), a new sunfilter protecting the skin against both UVB?+?UVA and blue light radiations", PHOTOCHEMICAL & PHOTOBIOLOGICAL SCIENCES, [Online] Bd. 20, Nr. 11, 13. Oktober 2021 (2021-10-13), Seiten 1475-1486, XP055977571, GB ISSN: 1474-905X, DOI: 10.1007/s43630-021-00114-x Gefunden im Internet: URL:https://link.springer.com/content/pdf/ 10.1007/s43630-021-00114-x.pdf> * Seite 1478; Abbildung 2 * ----- | 15 | |
| A | US 2010/226861 A1 (COLE CURTIS A [US] ET AL) 9. September 2010 (2010-09-09) * Absätze [0002], [0028], [0057] – [0058], [0099]; Anspruch 1; Abbildung 1; Beispiel 2 * ----- | 4-7,30 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 18. Januar 2024 | Duijs, Eric |

ANHANG ZUM EUROPÄISCHEN RECHERCHENBERICHT

**ANHANG ZUM EUROPÄISCHEN RECHERCHENBERICHT
ÜBER DIE EUROPÄISCHE PATENTANMELDUNG NR.**

EP 23 19 9787

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2024

| Im Recherchenbericht angeführtes Patentdokument | Datum der Veröffentlichung | Mitglied(er) der Patentfamilie | Datum der Veröffentlichung |
|---|---|---|---|
| TW 201326736 A | 01-07-2013 | KEINE | |
| US 2022240838 A1 | 04-08-2022 | CA 3146389 A1 | 14-01-2021 |
| | | EP 3997383 A1 | 18-05-2022 |
| | | US 2022240838 A1 | 04-08-2022 |
| | | WO 2021007420 A1 | 14-01-2021 |
| EP 3865052 A1 | 18-08-2021 | DE 102020103490 A1 | 12-08-2021 |
| | | EP 3865052 A1 | 18-08-2021 |
| US 2010226861 A1 | 09-09-2010 | AT E489070 T1 | 15-12-2010 |
| | | BR PI0607683 A2 | 22-09-2009 |
| | | CA 2605754 A1 | 09-11-2006 |
| | | CN 101198376 A | 11-06-2008 |
| | | CN 102053075 A | 11-05-2011 |
| | | CN 102053076 A | 11-05-2011 |
| | | EP 1874261 A2 | 09-01-2008 |
| | | EP 2275176 A1 | 19-01-2011 |
| | | EP 2275177 A1 | 19-01-2011 |
| | | ES 2535082 T3 | 05-05-2015 |
| | | JP 5188958 B2 | 24-04-2013 |
| | | JP 5399464 B2 | 29-01-2014 |
| | | JP 2008539239 A | 13-11-2008 |
| | | JP 2012103262 A | 31-05-2012 |
| | | KR 20080063445 A | 04-07-2008 |
| | | US 2006246020 A1 | 02-11-2006 |
| | | US 2010224795 A1 | 09-09-2010 |
| | | US 2010226861 A1 | 09-09-2010 |
| | | WO 2006118835 A2 | 09-11-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19828497 A1

- DE 102004020644 A1